# FASCICULE DE BREVET EUROPEEN

(11) **EP 3 212 373 B1**
(45) Date de publication et mention de la délivrance du brevet: **12.09.2018**
(21) Numéro de dépôt: 15800881.3
(22) Date de dépôt: 28.10.2015
(51) Int. Cl.: B29B 11/16, F01D 5/28, B29L 31/08

(54) **AUBE COMPOSITE COMPRENANT UNE PLATEFORME MUNIE D'UN RAIDISSEUR**
VERBUNDBLATT MIT EINER PLATTFORM, DIE MIT EINER VERSTEIFUNG AUSGESTATTET IST
COMPOSITE BLADE COMPRISING A PLATFORM EQUIPPED WITH A STIFFENER

(30) Priorité: 30.10.2014 US 201462072632 P; 03.06.2015 FR 1555064
(43) Date de publication de la demande: 06.09.2017
(73) Titulaire: Safran Aircraft Engines, 75015 Paris (FR)
(72) Inventeur: MARIN, Sébastien, 77550 Moissy-Cramayel Cedex (FR); DE GAILLARD, Thomas Alain, 77550 Moissy-Cramayel Cedex (FR); LAGUERRE, Audrey, 77550 Moissy-Cramayel Cedex (FR)
(74) Mandataire: Joanny, Damien Henri Xavier
(86) Numéro de dépôt international: PCT/FR2015/052898
(87) Numéro de publication internationale: WO 2016/066954

(56) Documents cités:
- WO-A1-2014/076408

## Description

### DOMAINE DE L'INVENTION

Le présent exposé concerne une préforme fibreuse pour une aube de turbomachine ainsi qu'une aube monobloc pouvant être formée au moyen d'une telle préforme, une roue aubagée et une turbomachine comprenant une telle aube.

Une telle préforme peut être utilisée pour réaliser en une seule pièce des aubes comprenant des plates-formes aérodynamiques dont la déformation centrifuge est controllée. De telles aubes peuvent être notamment des aubes de soufflante d'un turboréacteur d'avion, pour ne citer que cet exemple.

### ETAT DE LA TECHNIQUE ANTERIEURE

Afin de réduire la masse des turboréacteurs d'avion, et donc de réduire la consommation de ces turboréacteurs, il est désormais connu de fabriquer certaines aubes du réacteurs en matériau composite, bien plus léger que le métal traditionnellement utilisé jusqu'alors.

A cette fin, il est également connu aujourd'hui d'utiliser des techniques de tissage tridimensionnel afin d'obtenir des préformes fibreuses aboutissant à des aubes composites de très bonne qualité. Le document WO 2014/076408 décrit notamment un procédé de tissage d'une préforme fibreuse permettant d'obtenir de manière monobloc des aubes munies de plates-formes intrados et extrados, ces plates-formes étant d'epaisseur constante.

Toutefois, lors de tests et simulations réalisées sur de telles aubes, les inventeurs ont constaté que différentes zones de ces plates-formes se déformaient de manière plus ou moins importante sous l'effet des efforts centrifuges s'exerçant lors du fonctionnement de la turbomachine. Les inventeurs ont notamment remarqué que la déformation d'une zone d'une plate-forme est d'autant plus importante qu'elle présente un déport important par rapport à la pale.

Dès lors, ces plates-formes présentent en fonctionnement des irrégularités de forme susceptibles de pertuber la veine d'air et donc le rendement de la turbomachine. En outre, les inventeurs ont constaté que les plates-formes extrados, généralement plus longues, subissaient un fléchissement plus important que les plates-formes intrados de telles sorte que des discontinuités apparaissent à l'interface entre les plates-formes extrados et intrados de deux aubes consécutives, un risque de chevauchement des plates-formes intrados par les plates-formes extrados voisines étant en outre présent.

Il existe donc un réel besoin pour une préforme fibreuse, une aube, une roue aubagée et une turbomachine qui soient dépourvus, au moins en partie, des inconvénients inhérents aux systèmes connus précités.

### PRESENTATION DE L'INVENTION

Le présent exposé concerne une préforme fibreuse pour une aube de turbomachine, obtenue par tissage tridimensionnel, comprenant un premier tronçon longitudinal, apte à former un pied d'aube, un deuxième tronçon longitudinal, prolongeant vers le haut le premier tronçon longitudinal, apte à former une partie de pale, un premier tronçon transversal, s'étendant transversalement depuis la jonction entre les premier et deuxième tronçons longitudinaux, apte à former une première plate-forme, et une première bande raidisseuse, s'étendant vers le bas depuis le bord distal du premier tronçon transversal, apte à former un premier raidisseur de plate-forme.

Dans le présent exposé, les termes « longitudinal », « transversal », « inférieur », « supérieur » et leurs dérivés sont définis par rapport à la direction principale de l'aube considérée, le pied d'aube étant situé du côté inférieur de l'aube selon cette référence ; les termes « axial », « radial », « tangentiel », « intérieur », « extérieur » et leurs dérivés sont quant à eux définis par rapport à l'axe principal de la roue comportant ces aubes, c'est-à-dire en général l'axe de la turbomachine. On entend par « plan axial » un plan passant par l'axe principal de la turbomachine et par « plan radial » un plan perpendiculaire à cet axe principal ; on entend par « plan longitudinal » un plan parallèle à la direction principale de l'aube et perpendiculaire à la direction d'extension du pied d'aube : un tel plan longitudinal est donc un plan radial dans le référentiel de la turbomachine. En outre, les termes « amont » et « aval » sont définis par rapport à la circulation de l'air dans la turbomachine.

Grâce à une telle préforme, il est possible d'obtenir de manière monobloc une aube comprenant un pied d'aube, une partie de pale et au moins une plate-forme munie d'un raidisseur assurant une déformation plus régulière de la plate-forme sous l'effet de la force centrifuge au cours du fonctionnement de la turbomachine.

En effet, la présence de cette bande raidisseuse, s'étendant sensiblement radialement, permet de mieux solidariser les différentes zones de la plate-forme, et tout particulièrement les zones distales de la plate-forme, afin de tendre vers une uniformisation de leurs déformations radiales en bout de plate-forme. On moyenne ainsi en quelque sorte les déformations de la plate-forme, les zones habituellement fortement défléchies tirant vers l'extérieur les zone habituellements moins défléchies tandis que ces dernières retiennent vers l'intérieur les zones soumises à une force centrifuge importante. Dès lors, la plate-forme conserve en fonctionnement une profil relativement régulier, ne pertubant pas ou peu la circulation de la veine d'air.

Grâce à cette préforme, on peut donc bénéficier des avantages d'une aube monobloc tissée 3D (gain de masse ; nombre de pièces réduit ; montage et maintenance simplifiés etc.) tout en assurant une régularité aérodynamique de la veine d'air.

En outre, de tels raidisseurs forment des butées empêchant une plate-forme de chevaucher la plate-forme de l'aube voisine, en cas de choc violent successif à une ingestion d'oiseau par exemple.

Dans certains modes de réalisation, la largeur de la première bande raidisseuse est évolutive. De cette manière, il est possible de tenir compte de la géométrie de la plate-forme pour compenser de manière plus optimisée les déformations de cette dernière. En particulier, une largeur évolutive permet de régler d'une part la raideur de la bande raidisseuse, et donc la transmission des efforts d'une zone à l'autre de la plate-forme, et d'autre part de régler la masse ajoutée localement à la plate-forme et donc de régler localement les efforts centrifuges exercés sur la plate-forme. En particulier, en ajoutant localement de la masse à une zone habitullement moins défléchies de la plate-forme, on augmente l'intensité de la force centrifuge dans cette zone de telle sorte que cette dernière sera un peu plus défléchie et s'alignera plus facilement avec les zones voisines naturellements plus défléchies.

Dans certains modes de réalisation, la première bande raidisseuse s'étend tout le long du bord distal du premier tronçon transversal. De cette manière, on exerce un contrôle des efforts centrifuges tout le long de la plate-forme.

Dans certains modes de réalisation, la largeur de la première bande raidisseuse est minimale au niveau où, plus précisément dans le plan longitudinal où, la largeur du premier tronçon transversal est maximale. Les inventeurs ont constatés que plus la largeur de la plate-forme (donc du premier tronçon transversal) était importante, plus la zone en question de la plate-forme subissait des déformation radiale importantes. Ceci s'explique par le fait que plus la plate-forme est longue, plus le couple exercé par la force centrifuge sur la portion distale de la zone en question est important, le bras de levier reliant cette portion distale à la zone de connexion de la plate-forme sur le pied d'aube étant plus importante. Dès lors, dans de tels modes de réalisation, on n'ajoute que peu de masse à cette zone naturellement fortement défléchie de telle sorte que l'on n'aggrave pas ou peu sa déformation radiale en fonctionnement.

Dans certains modes de réalisation, la largeur de la première bande raidisseuse est maximale au niveau où, plus précisément dans le plan longitudinal où, la largeur du premier tronçon transversal est minimale. De cette manière, on ajoute une masse plus importante au niveau de cette zone naturellement peu défléchie de telle sorte que cette dernière présentera une déformation radiale plus importante en fonctionnement et s'alignera donc plus facilement avec les zones voisines naturellement plus défléchies.

Dans certains modes de réalisation, en progressant le long du bord distal du premier tronçon transversal, la largeur de la première bande raidisseuse augmente lorsque la largeur du premier tronçon transversal diminue et diminue lorsque la largeur du premier tronçon transversal augmente. De cette manière, on ajuste la masse et la raideur de la bande raidisseuse tout le long de la plate-forme en fonction de la géométrie de cette dernière : on obtient ainsi une déformation plus régulière de la plate-forme en fonctionnement sur toute sa longueur.

Dans certains modes de réalisation, la largeur de la première bande raidisseuse dans un plan longitudinal donné est inversement proportionnelle à la largeur du premier tronçon transversal dans ledit plan longitudinal. Les inventeurs ont constaté que cette relation assurait une très bonne régularité des déformations de la plate-forme et donc une réduction importante des distortions aérodynamiques subies par la veine d'air.

Dans certains modes de réalisation, la première bande raidisseuse comprend un nombre constant de couches de fils. De préférence, son épaisseur peut ainsi être constante.

Dans certains modes de réalisation, la première bande raidisseuse comprend le même nombre de couches de fils que le premier tronçon transversal. De préférence, les couches de fils formant la première bande raidisseuse sont issues des couches de fils formant le premier tronçon transversal. Dès lors, l'épaisseur de la première bande raidisseuse est identique à celle du premier tronçon transversal.

Dans d'autres modes de réalisation, l'épaisseur de la première bande raidisseuse (ou du raidisseur issu de cette dernière) est inférieure, ou supérieure, à l'épaisseur du premier tronçon transversal (ou de la plateforme issue de ce dernier). En particulier, l'épaisseur de la première bande raidisseuse (ou du raidisseur issu de cette dernière) peut évoluer le long de sa direction principale.

Dans certains modes de réalisation, en progressant le long du bord distal du premier tronçon transversal, la masse d'un segment de longueur donné de la première bande raidisseuse augmente lorsque la largeur du premier tronçon transversal diminue et diminue lorsque la largeur du premier tronçon transversal augmente.

Dans certains modes de réalisation, la masse d'un segment donné de la première bande raidisseuse est inversement proportionnelle à la longueur du premier tronçon transversal dans le plan transersal longitudinal passant par ce segment.

Dans certains modes de réalisation, la première bande raidisseuse forme avec le premier tronçon transversal un angle compris entre 60° et 89°, de préférence entre 75° et 85°. De cette manière, lorsque deux aubes sont montées consécutivement au sein d'une même roue aubagée, donc avec une certaine inclinaison l'une par rapport à l'autre, leurs plates-formes peuvent être disposées contigüement, leurs raidisseurs étant plaqués l'un contre l'autre, éventuellement à un jeu fonctionnel près, le long d'une surface de contact importante aidant encore à réduire les déformations radiales. On remarque en effet qu'avec une configuration à 90°, les raidisseurs de deux plates-formes consécutives s'entraveraient l'un l'autre, mettant en contrainte les plates-formes et n'assurant qu'un contact linéaire entre les raidisseurs, ce qui perturberait fortement le comportement mécanique des plates-formes.

Dans certains modes de réalisation, la préforme comprend un deuxième tronçon transversal, s'étendant transversalement depuis la jonction entre les premier et deuxième tronçons longitudinaux, dans le prolongement et à l'opposé du premier tronçon transversal, apte à former une deuxième plate-forme, et une deuxième bande raidisseuse, s'étendant vers le bas depuis le bord distal du deuxième tronçon transversal, apte à former un deuxième raidisseur de plate-forme. On peut ainsi obtenir une aube monobloc comprenant à la fois une plate-forme intrados et une plate-forme extrados, chacune d'entre elles étant munie d'un raidisseur.

On comprend naturellement que toutes les caractéristiques évoquées ci-dessus au sujet de la première bande raidisseuse et/ou du premier tronçon transversal peuvent se transposer à la deuxième bande raidisseuse ou au deuxième tronçon transversal, respectivement.

Dans certains modes de réalisation, la largeur de la première bande raidisseuse, apte à former le raidisseur de la plate-forme extrados, est plus importante dans sa zone médiane qu'à ses extrémités amont et aval. En effet, cette caractéristique suit la logique d'équilibrage expliquée ci-dessus, la plate-forme extrados étant généralement plus large à ses extrémités plutôt qu'en son milieu.

Dans certains modes de réalisation, la largeur de la deuxième bande raidisseuse, apte à former le raidisseur de la plate-forme intrados, est plus faible dans sa zone médiane qu'à ses extrémités amont et aval. En effet, cette caractéristique suit la logique d'équilibrage expliquée ci-dessus, la plate-forme intrados étant généralement plus large à son milieu plutôt qu'à ses extrémités.

Dans certains modes de réalisation, les fils utilisés pour le tissage de la préforme sont des fibres de carbone. Il peut toutefois s'agir de n'importe quel autre type de fil, par exemple des fibres de verre ou de kevlar.

Dans certains modes de réalisation, l'armure utilisée pour le tissage tridimensionnel de la préforme peut être du type interlock 3D. Toutefois, le tissage des surfaces externes de la préforme peut être essentiellement bidimensionnel, du type satin par exemple.

Le présent exposé concerne également une aube pour turbomachine comprenant un pied d'aube, une partie de pale, s'étendant vers le haut depuis le pied d'aube, une plate-forme s'étendant transversalement à la partie de pale au niveau de la jonction entre le pied d'aube et la partie de pale, et un raidisseur prenant la forme d'une bande s'étendant vers le bas le long du bord distal de la plate-forme. On comprend que cette aube correspond à celle que l'on peut obtenir à l'aide de la préforme ci-dessus. Toutefois, une telle aube munie d'un tel raidisseur pourrait tout à fait être obtenue à l'aide d'une autre méthode ne faisant pas appel à du tissage 3D, ou être réalisée dans un autre métériau qui ne soit pas composite : cette aube pourrait par exemple être réalisée en métal et obtenue par fonderie.

Dès lors, toutes les caractéristiques et avantagages de la bande raidisseuse décrits ci-dessus se transposent directement à ce raidisseur, quel que soit son matériau ou sa technique d'obtention. En particulier : sa largeur peut être évolutive ; il peut s'étendre tout le long de la plate-forme ; sa largeur peut évoluer le long du bord de la plate-forme en fonction de la largeur de cette dernière et notamment de manière inversement proportionnelle à cette dernière ; il peut former un angle différent de 90° avec la plate-forme, etc.

Dans certains modes de ralisation, l'aube est réalisée de manière monobloc en matériau composite au moyen d'une préforme fibreuse selon l'un quelconque des modes de réalisation précédents, ladite préforme ayant été mise en forme dans un moule et noyée dans une matrice.

Dans certains modes de réalisation, la matrice est de type organique. Il peut notamment s'agir d'une résine époxy.

Dans d'autres modes de réalisation, la matrice est du type céramique.

Dans d'autres modes de réalisation, l'aube est réalisée en matériau métallique, de préférence de manière monobloc, par fonderie par exemple.

Le présent exposé concerne également une roue aubagée pour turbomachine, comprenant une pluralité d'aubes selon l'un quelconque des modes de réalisation précédents

Il peut s'agir d'une roue de rotor, dans laquelle les aubes sont disposées angulairement autour d'un moyeu tournant, ou d'une roue de stator, dans laquelle les aubes sont disposée angulairement au sein d'une virole fixe.

Le présent exposé concerne également une turbomachine, comprenant au moins une aube ou une roue aubagée selon l'un quelconque des modes de réalisation précédents.

Les caractéristiques et avantages précités, ainsi que d'autres, apparaîtront à la lecture de la description détaillée qui suit, d'exemples de réalisation de la préforme, de l'aube, du carter intermédiaire et de la turbomachine proposés. Cette description détaillée fait référence aux dessins annexés.

### BREVE DESCRIPTION DES DESSINS

Les dessins annexés sont schématiques et visent avant tout à illustrer les principes de l'invention.

Sur ces dessins, d'une figure (FIG) à l'autre, des éléments (ou parties d'élément) identiques sont repérés par les mêmes signes de référence.
La FIG 1 est un plan en coupe axiale d'une turbomachine selon l'invention.
La FIG 2 est un schéma partiel en coupe radiale d'une roue aubagée selon l'invention.
La FIG 3 est une vue en perspective d'une aube selon un exemple de réalisation.
La FIG 4 est une vue partielle du côté intrados de l'aube de la FIG. 3.
La FIG 5 est une vue partielle du côté extrados de l'aube de la FIG. 3.
La FIG 6 illustre de manière schématique la préforme correspondant à cet exemple d'aube avant sa mise en forme.
La FIG 7 illustre de manière schématique la préforme correspondant à cet exemple d'aube après sa mise en forme.

### DESCRIPTION DETAILLEE D'EXEMPLES DE REALISATION

Afin de rendre plus concrète l'invention, des exemples de réalisation sont décrits en détail ci-après, en référence aux dessins annexés. Il est rappelé que l'invention ne se limite pas à ces exemples.

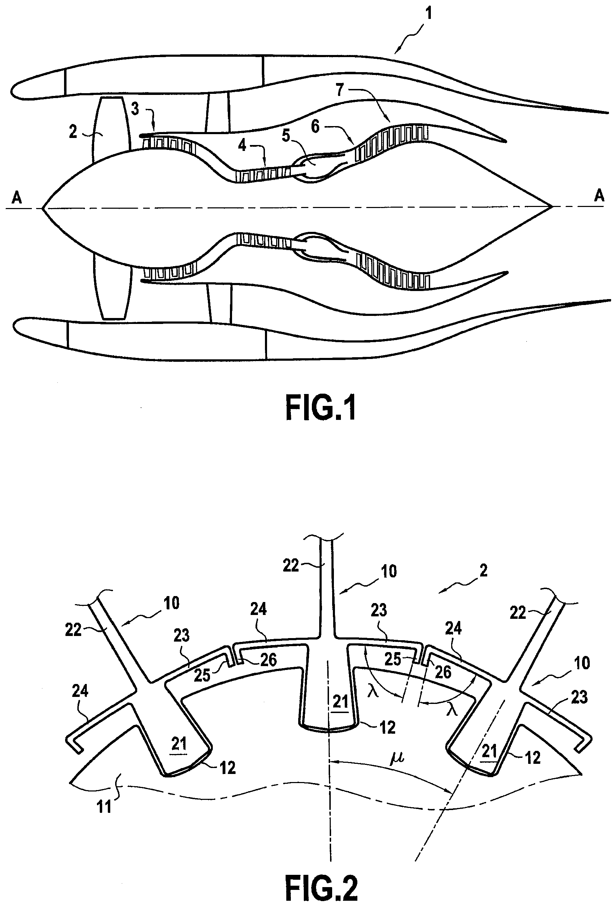

La FIG 1 représente, en coupe selon un plan vertical passant par son axe principal A, un turboréacteur à double flux 1 selon l'invention. Il comporte, d'amont en aval selon la circulation du flux d'air, une soufflante 2, un compresseur basse pression 3, un compresseur haute pression 4, une chambre de combustion 5, une turbine haute pression 6, et une turbine basse pression 7.

Comme cela est représenté sur la FIG. 2, la soufflante 2 est munie d'une pluralité d'aubes de soufflante 10 montées angulairement autour de l'axe A sur un disque 11 connecté à l'arbre basse pression de la turbomachine 1.

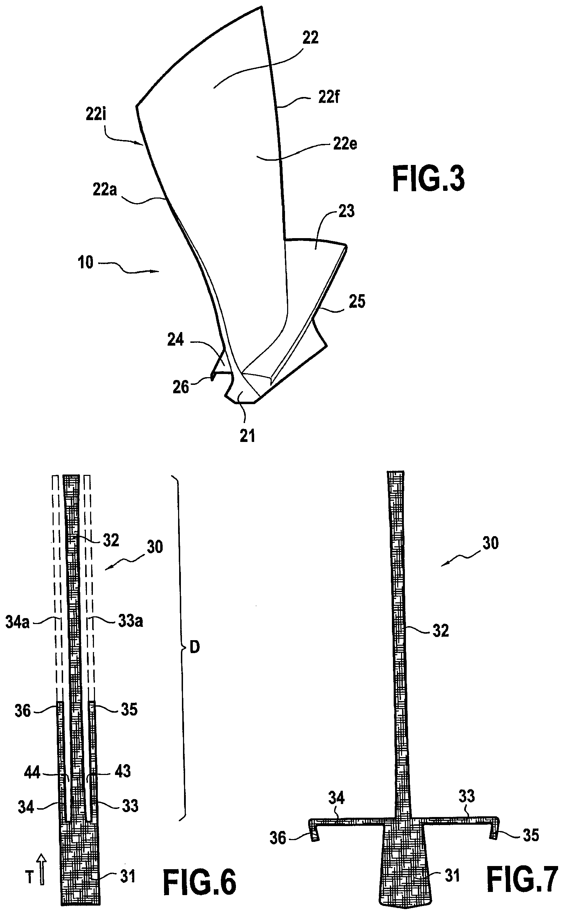

Une telle aube de soufflante est représentée sur la FIG. 3. Elle comprend un pied d'aube 21 en queue d'arronde configurée pour s'engager dans une rainure 12 du disque 11 afin de la fixer au disque 11. Ce pied d'aube 21 est prolongé vers l'extérieur par une pale 22 présentant une face extrados 22e et une face intrados 22i s'entendant chacune d'amont en aval entre un bord d'attaque 22a et un bord de fuite 22f.

L'aube 10 comprend en outre une plate-forme extrados 23, s'étendant transversalement du côté extrados de l'aube depuis la jonction entre le pied d'aube 21 et la pale 22, et une plate-forme intrados 24, s'étendant transversalement du côté intrados de l'aube depuis la jonction entre le pied d'aube 21 et la pale 22.

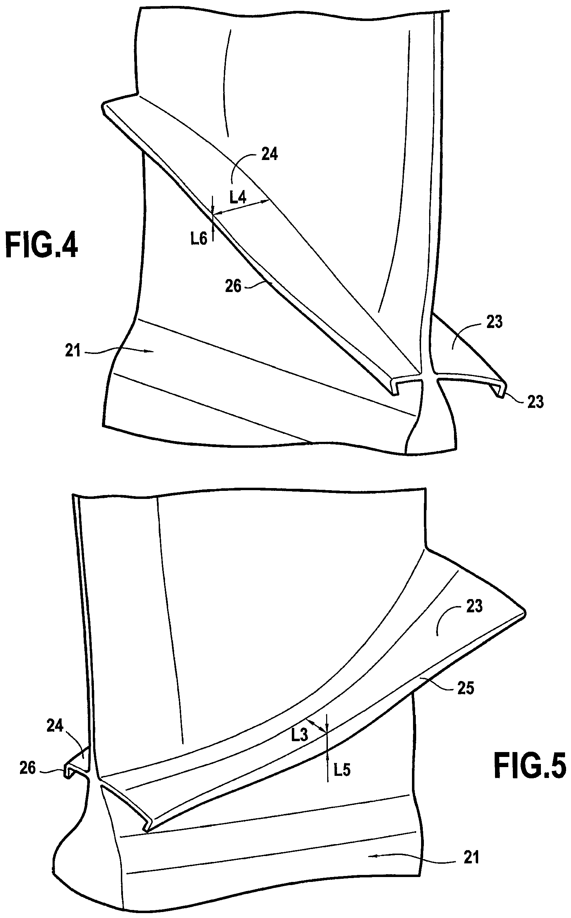

Conformément à l'invention, chaque plate-forme 23, 24 est en outre munie d'un raidisseur 25, 26. Ces derniers, mieux visibles sur les FIG. 4 et 5, prennent la forme d'une patte formant une bande ou une réglette s'étendant radialement tout le long du bord distal de chacune des plates-formes 23, 24 ; plus précisément, chaque raidisseur 25, 26 s'étend depuis le bord distal de sa plate-forme 23, 24 en direction de l'intérieur, c'est-à-dire vers le bas dans le référentiel de l'aube, en formant un angle λ par rapport à cette plate-forme 23, 24 ; un raccordement en arrondi peut être prévu entre le raidisseur 25, 26 et la plate-forme 23, 24.

Comme cela est représenté à la FIG. 2, cet angle λ est sensiblement égal à la moitié de l'écart angulaire µ séparant deux aubes 10 au sein de la roue aubagée 2. Par exemple, si cette roue 2 comprend une aube 10 tous les 20°, les raidisseurs 25, 26 formeront un angle λ de 10° par rapport aux plates-formes 23, 24. De cette manière, lorsque les aubes 10 sont montées sur le disque 11 de la roue aubagée 2, les plates-formes extrados et intrados 23, 24 de chaque couple d'aubes consécutives se suivent de manière continue et leurs raidisseurs 25 et 26 sont en appui les uns contre les autres, à un jeu fonctionnel près, sur toute ou pratiquement toute leur surface.

En outre, comme cela est visible sur les FIG. 4 et 5, la largeur L5, L6 de chacun de ces raidisseurs 25, 26 évolue le long de sa plate-forme 23, 24 en fonction de la largueur L3, L4 de cette dernière. De manière plus précise, dans un plan longitudinal donné, plus la plate-forme 23, 24 est large, plus son raidisseur 25, 26 est étroit. De manière encore plus précise, la largueur d'un raidisseur donné 25, 26 évolue le long du bord distal de la plate-forme 23, 24 correspondante de manière inversement proprotionnelle à la largeur de cette plate-forme 23, 24.

Ainsi, comme cela est visible à la FIG. 4, en raison de la courbure concave de la face intrados de l'aube 10, la plate-forme intrados 24 possède une largeur L4 qui, d'amont en aval, augmente jusqu'à une zone sensiblement médiane de la pale 22 puis diminue jusqu'au bord de fuite 22f : dès lors, la largeur L6 du raidisseur 26 diminue depuis son extrémité amont jusqu'à cette zone médiane, puis augmente à nouveau jusqu'à son extrémité aval.

A l'inverse, comme cela est visible à la FIG.5, en raison de la courbure convexe de la face extrados de l'aube 10, la plate-forme extrados 23 possède une largeur L3 qui, d'amont en aval, diminue jusqu'à une zone sensiblement médiane de la pale 22 puis augmente jusqu'au bord de fuite 22f : dès lors, la largeur L5 du raidisseur 25 augmente depuis son extrémité amont jusqu'à cette zone médiane, puis diminue à nouveau jusqu'à son extrémité aval où, compte tenu de la grande largeur de la plate-forme extrados 23, elle s'annule ou s'annule pratiquement.

Dans cet exemple, l'aube 10 est obtenue de manière monobloc par tissage 3D d'une préforme fibreuse 30 et injection d'une résine organe selon le procédé RTM connu de l'homme du métier.

La FIG 6 représente cette préforme 30 tissée tridimensionnellement permettant de réaliser cet exemple d'aube 10. La FIG 7 représente la même préforme 30 après sa mise en forme. Cette préforme 30 va être décrite de bas en haut, c'est-à-dire d'amont en aval dans la direction T de tissage. Il va toutefois de soi que le tissage pourrait être réalisé à partir de l'autre extrémité et dans l'autre sens.

Dans cet exemple de réalisation, la préforme 30 est tissée tridimensionnellement en fibres de carbone selon une armure interlock 3D. Seules les surfaces de la préforme 30 sont tissées bidimensionnellement selon une armure de type satin.

A l'extrémité inférieure, le tissage débute par la réalisation d'un premier tronçon longitudinal 31 qui formera le pied 21 de l'aube 10.

Au-dessus de ce premier tronçon longitudinal 31, débute une zone de déliaison D dans laquelle un premier pan libre 33a, un deuxième tronçon longitudinal 32, et un deuxième pan libre 34a sont tissés conjointement de manière déliée avec des plans de déliaison respectifs 43 et 44. Des méthodes de tissage permettant une telle déliaison sont désormais bien connues dans le domaine du tissage 3D.

Des sorties de couches peuvent en outre être réalisées le long du tissage T entre le deuxième tronçon longitudinal 32 et chacun des pans libres 50a, 50b afin d'affiner le deuxième tronçon longitudinal 32 et donc la future pale 22. Des méthodes de tissage permettant de telles sorties de couches sont désormais bien connues dans le domaine du tissage 3D.

Une fois le tissage terminé, les pans libres 33a et 34a sont découpés de manière à former, pour le premier, un premier tronçon transversal 33 qui formera la plate-forme extrados 23 de l'aube 10 et une première bande raidisseuse 35 qui formera le raidisseur extrados 25 et, pour le second, un deuxième tronçon transversal 34 qui formera la plate-forme intrados 24 de l'aube 10 et une deuxième bande raidisseuse 36 qui formera le raidisseur intrados 26.

Il faut noter ici que les qualificatifs « transversal » et « longitudinal » sont donnés en fonction de la position finale du tronçon considéré, les tronçons transversaux étant nécessairement tissés longitudinalement avant d'être repliés transversalement.

Une fois les pans libres 33a et 34a découpés, les fils flottés résultant des sorties de couches réalisées en surface du deuxième tronçon longitudinal 32 sont accessibles et peuvent être rasés.

La préforme 30 peut être humidifiée pour l'assouplir et permettre un décadrage plus aisé des fibres. Elle est alors introduite dans un moule de formage dont l'espace intérieur est ajusté à la géométrie recherchée pour la préforme 30.

On sèche ensuite la préforme 30 afin que celle-ci se raidisse, bloquant ainsi la géométrie imposée lors de la mise en forme. La préforme 30 est enfin disposée dans un moule d'injection, aux dimensions de l'aube finale souhaitée 10, dans lequel on injecte une matrice, ici une résine epoxy. Une telle injection peut par exemple être réalisée par le procédé connu RTM (« resin transfer molding »).

A l'issue de cette étape, on obtient alors l'aube 10 en matériau composite composée d'une préforme 30 tissée en fibres de carbone noyée dans une matrice époxy. Des étapes d'usinage peuvent éventuellement compléter ce procédé pour finaliser l'aube 10.

Naturellement, l'exemple de tissage décrit ci-dessus n'est qu'un exemple parmi de nombreux autres possibles que l'homme du métier reconnaîtra aisément. En particulier, il est possible d'imaginer d'autres déliaisons ou d'utiliser d'autres techniques de tissage tels des croisements de couches, des sorties de couches ou des transitions d'épaisseur pour obtenir une géométrie de préforme analogue. L'homme du métier trouvera notamment de nombreux exemples de tissages dans le document WO 2014/076408.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Préforme fibreuse pour une aube de turbomachine, obtenue par tissage tridimensionnel, comprenant
un premier tronçon longitudinal (31), apte à former un pied d'aube (21),
un deuxième tronçon longitudinal (32), prolongeant vers le haut le premier tronçon longitudinal (31), apte à former une partie de pale (22),
un premier tronçon transversal (33), s'étendant transversalement depuis la jonction entre les premier et deuxième tronçons longitudinaux (31, 32), apte à former une première plate-forme (23), et
une première bande raidisseuse (35), s'étendant vers le bas depuis le bord distal du premier tronçon transversal (33), apte à former un premier raidisseur de plate-forme (25).

2. Préforme selon la revendication 1, dans laquelle la largeur (L5) de la première bande raidisseuse (35) est évolutive.

3. Préforme selon la revendication 1 ou 2, dans laquelle la première bande raidisseuse (35) s'étend tout le long du bord distal du premier tronçon transversal (33).

4. Préforme selon la revendication 3, dans laquelle la largeur (L5) de la première bande raidisseuse (35) est minimale au niveau où la largeur (L3) du premier tronçon transversal (33) est maximale, et
la largeur (L5) de la première bande raidisseuse (35) est maximale au niveau où la largeur (L3) du premier tronçon transversal (33) est minimale.

5. Préforme selon la revendication 3 ou 4, dans laquelle, en progressant le long du bord distal du premier tronçon transversal (33), la largeur (L5) de la première bande raidisseuse (35) augmente lorsque la largeur (L3) du premier tronçon transversal (33) diminue et diminue lorsque la largeur (L3) du premier tronçon transversal (33) augmente.

6. Préforme selon la revendication 5, dans laquelle la largeur (L5) de la première bande raidisseuse (35) dans un plan longitudinal donné est inversement proportionnelle à la largeur (L3) du premier tronçon transversal (33) dans ledit plan longitudinal.

7. Préforme selon l'une quelconque des revendications 1 à 6, dans laquelle la première bande raidisseuse (35) forme avec le premier tronçon transversal (33) un angle (λ) compris entre 60° et 89°, de préférence entre 75° et 85°.

8. Préforme selon l'une quelconque des revendications 1 à 7, comprenant un deuxième tronçon transversal (34), s'étendant transversalement depuis la jonction entre les premier et deuxième tronçons longitudinaux (31, 32), dans le prolongement et à l'opposé du premier tronçon transversal (33), apte à former une deuxième plate-forme (24), et
une deuxième bande raidisseuse (36), s'étendant vers le bas depuis le bord distal du deuxième tronçon transversal (34), apte à former un deuxième raidisseur de plate-forme (26).

9. Préforme selon la revendication 8, dans laquelle le premier tronçon transversal (33) est apte à former la plate-forme extrados (23) de l'aube (10) et le deuxième tronçon transversal (34) est apte à former la plate-forme intrados (24) de l'aube (10),
dans laquelle la largeur (L5) de la première bande raidisseuse (35), apte à former le raidisseur (25) de la plate-forme extrados (23), est plus importante dans sa zone médiane qu'à ses extrémités amont et aval, et
dans laquelle la largeur (L6) de la deuxième bande raidisseuse (36), apte à forme le raidisseur (26) de la plate-forme intrados (24), est plus faible dans sa zone médiane qu'à ses extrémités amont et aval.

10. Aube pour turbomachine, comprenant
un pied d'aube (21),
une partie de pale (22), s'étendant vers le haut depuis le pied d'aube,
une plate-forme (23) s'étendant transversalement à la partie de pale (22) au niveau de la jonction entre le pied d'aube (21) et la partie de pale (22), et
un raidisseur (25) prenant la forme d'une bande s'étendant vers le bas le long du bord distal de la plate-forme (23).

11. Aube selon la revendication 10, réalisée de manière monobloc en matériau composite au moyen d'une préforme fibreuse (30) selon l'une quelconque des revendications 1 à 9, ladite préforme (30) ayant été mise en forme dans un moule et noyée dans une matrice, de préférence de type organique.

12. Roue aubagée pour turbomachine, comprenant une pluralité d'aubes (10) selon la revendication 11.

13. Turbomachine, comprenant au moins une aube (10) selon la revendication 11 ou une roue aubagée (2) selon la revendication 12.

## Patentansprüche

1. Faserige Vorform für eine Turbinenschaufel, die durch dreidimensionales Weben erhalten ist, umfassend
einen ersten Längsabschnitt (31), der geeignet ist, einen Schaufelfuß (21) zu bilden,
einen zweiten Längsabschnitt (32), der den ersten Längsabschnitt (31) nach oben verlängert, der geeignet ist, einen Schaufelblattteil (22) zu bilden,
einen ersten Querabschnitt (33), der sich in Querrichtung von der Verbindungsstelle zwischen dem ersten und zweiten Längsabschnitt (31, 32) erstreckt, der geeignet ist, eine erste Plattform (23) zu bilden, und
einen ersten Versteifungsstreifen (35), der sich von der distalen Kante des ersten Querabschnitts (33) nach unten erstreckt, der geeignet ist, eine erste Plattformversteifung (25) zu bilden.

2. Vorform gemäß Anspruch 1, wobei die Breite (L5) des ersten Versteifungsstreifens (35) skalierbar ist.

3. Vorform gemäß Anspruch 1 oder 2, wobei sich der erste Versteifungsstreifen (35) entlang der gesamten distalen Kante des ersten Querabschnitts (33) erstreckt.

4. Vorform gemäß Anspruch 3, wobei die Breite (L5) des ersten Versteifungsstreifens (35) dort minimal ist, wo die Breite (L3) des ersten Querabschnitts (33) maximal ist, und
wobei die Breite (L5) des ersten Versteifungsstreifens (35) dort maximal ist, wo die Breite (L3) des ersten Querabschnitts (33) minimal ist.

5. Vorform gemäß Anspruch 3 oder 4, wobei, indem sich entlang der distalen Kante des ersten Querabschnitts (33) bewegt wird, die Breite (L5) des ersten Versteifungsstreifens (35) zunimmt, wenn die Breite (L3) des ersten Querabschnitts abnimmt, und abnimmt, wenn die Breite (L3) des ersten Querschnitts (33) zunimmt.

6. Vorform gemäß Anspruch 5, wobei die Breite (L5) des ersten Versteifungsstreifens (35) in einer gegebenen Längsebene umgekehrt proportional zu der Breite (L3) des ersten Querabschnitts (33) in der Längsebene ist.

7. Vorform gemäß einem der Ansprüche 1 bis 6, wobei der erste Versteifungsstreifen (35) mit dem ersten Querabschnitt (33) einen Winkel (A) bildet, der zwischen 60° und 89°, vorzugsweise zwischen 75° und 85° beträgt.

8. Vorform gemäß einem der Ansprüche 1 bis 7, umfassend einen zweiten Querabschnitt (34), der sich in Querrichtung von der Verbindungsstelle zwischen dem ersten und zweiten Längsabschnitt (31, 32) in der Verlängerung und gegenüberliegend von dem ersten Querabschnitt (33) erstreckt, der geeignet ist, eine zweite Plattform (24) zu bilden, und
einen zweiten Versteifungsstreifen (36), der sich von der distalen Kante des zweiten Querabschnitts (34) nach unten erstreckt, der geeignet ist, eine zweite Plattformversteifung (26) zu bilden.

9. Vorform gemäß Anspruch 8, wobei der erste Querabschnitt (33) geeignet ist, die Saugseitenplattform (23) der Schaufel (10) zu bilden und der zweite Querabschnitt (34) geeignet ist, die Druckseitenplattform (24) der Schaufel (10) zu bilden,
wobei die Breite (L5) des ersten Versteifungsstreifens (35), der geeignet ist, das Versteifungselement (25) der Saugseitenplattform (23) zu bilden, in seinem mittleren Bereich größer ist als an seinem stromaufwärtigen und stromabwärtigen Ende, und
wobei die Breite (L6) des zweiten Versteifungsstreifens (36), der geeignet ist, das Versteifungselement (26) der Druckseitenplattform (24) zu bilden, in seinem mittleren Bereich geringer ist als an seinem stromaufwärtigen und stromabwärtigen Ende.

10. Turbinenschaufel, umfassend
einen Schaufelfuß (21),
einen Schaufelblattteil (22), der sich von dem Schaufelfuß nach oben erstreckt,
eine Plattform (23), die sich quer zu dem Schaufelblattteil (22) auf Ebene der Verbindungsstelle zwischen Schaufelfuß (21) und dem Schaufelblattteil (22) erstreckt,
eine Versteifung (25), die die Form eines Streifens annimmt, die sich entlang der distalen Kante der Plattform (23) erstreckt.

11. Schaufel gemäß Anspruch 10, die einstückig aus einem Verbundmaterial mittels einer faserigen Vorform (30) gemäß einem der Ansprüche 1 bis 9 hergestellt ist, wobei die Vorform (30) in einer Form geformt und in eine Matrix, vorzugsweise vom organischen Typ, eingebettet worden ist.

12. Turbinenschaufelrad, umfassend mehrere Schaufeln (10) gemäß Anspruch 11.

13. Turbine, umfassend mindestens eine Schaufel (10) gemäß Anspruch 11 oder ein Schaufelrad (2) gemäß Anspruch 12.

## Claims

1. A fiber preform for a turbine engine blade obtained by three-dimensional weaving, the preform comprising:
a first longitudinal segment (31) suitable for forming a blade root (21);
a second longitudinal segment (32) extending the first longitudinal segment (31) upwards and suitable for forming an airfoil portion (22);
a first transverse segment (33) extending transversely from the junction between the first and second longitudinal segments (31, 32) and suitable for forming a first platform (23); and
a first stiffener strip (35) extending downwards from the distal edge of the first transverse portion (33) and suitable for forming a first platform stiffener (25).

2. A preform according to claim 1, wherein the first stiffener strip (35) is of varying width (L5).

3. A preform according to claim 1 or claim 2, wherein the first stiffener strip (35) extends all along the distal edge of the first transverse segment (33).

4. A preform according to claim 3, wherein the first stiffener strip (35) is of minimum width (L5) where the width (L3) of the first transverse segment (33) is at a maximum; and
the first stiffener strip (35) is of maximum width (L5) where the width (L3) of the first transverse segment (33) is at a minimum.

5. A preform according to claim 3 or claim 4, wherein, on going along the distal edge of the first transverse segment (33), the width (L5) of the first stiffener strip (35) increases while the width (L3) of the first transverse segment (33) decreases, and decreases while the width (L3) of the first transverse segment (33) increases.

6. A preform according to claim 5, wherein the width (L5) of the first stiffener strip (35) in a given longitudinal plane is inversely proportional to the width (L3) of the first transverse segment (33) in said longitudinal plane.

7. A preform according to any one of claims 1 to 6, wherein the first stiffener strip (35) forms an angle (λ) with the first transverse segment (33), the angle (λ) lying in the range 60° to 89°, and preferably in the range 75° to 85°.

8. A preform according to any one of claims 1 to 7, including a second transverse segment (34) extending transversely from the junction between the first and second longitudinal segments (31, 32) in line with and away from the first transverse segment (33), and suitable for forming a second platform (24), and
a second stiffener strip (36) extending downwards from the distal edge of the second transverse segment (34), suitable for forming a second platform stiffener (26) .

9. A preform according to claim 8, wherein the first transverse segment (33) is suitable for forming the suction side platform (23) of the blade (10) and the second transverse segment (34) is suitable for forming the pressure side platform (24) of the blade (10);
wherein the first stiffener strip (35) suitable for forming the stiffener (25) of the suction side platform (23) is of width (L5) that is greater in its middle zone than at its upstream and downstream ends; and
wherein the second stiffener strip (36) suitable for forming the stiffener (26) of the pressure side platform (24) is of width (L6) that is smaller in its middle zone than at its upstream and downstream ends.

10. A turbine engine blade comprising:
a blade root (21); and
an airfoil portion (22) extending upwards from the blade root;
a platform (23) extending transversely from the airfoil (22) at the junction between the blade root (21) and the airfoil portion (22); and
a stiffener (25) in the form of a strip extending downwardly along the distal edge of the platform (23).

11. A blade according to claim 10, made as a single piece out of composite material by means of a fiber preform (30) according to any one of claims 1 to 9, said preform (30) having been shaped in a mold and embedded in a matrix, preferably a matrix of organic type.

12. A blade wheel for a turbine engine including a plurality of blades (10) according to claim 11.

13. A turbine engine including at least one blade (10) according to claim 11, or at least one bladed wheel (2) according to claim 12.
